# EUROPÄISCHE PATENTSCHRIFT

(11) **EP 2 167 275 B1**
(45) Veröffentlichungstag und Bekanntmachung des Hinweises auf die Patenterteilung: **05.01.2011**
(21) Anmeldenummer: 08759797.7
(22) Anmeldetag: 20.05.2008
(51) Int. Cl.: B23Q 15/16, B23Q 15/28, B23Q 17/22, B24B 5/42, B24B 19/12, B24B 49/03

(54) **SCHLEIFZENTRUM UND VERFAHREN ZUM GLEICHZEITIGEN SCHLEIFEN MEHRERER LAGER VON KURBELWELLEN**
GRINDING CENTER AND METHOD FOR THE SIMULTANEOUS GRINDING OF MULTIPLE CRANKSHAFT BEARINGS
STATION DE MEULAGE ET PROCEDE DE MEULAGE SIMULTANE DE PLUSIEURS PALIERS DE VILEBREQUIN

(30) Priorität: 08.06.2007 DE 102007026562
(43) Veröffentlichungstag der Anmeldung: 31.03.2010
(73) Patentinhaber: Erwin Junker Maschinenfabrik GmbH, 77787 Nordrach (DE)
(72) Erfinder: JUNKER, Erwin, 77815 Bühl (DE)
(74) Vertreter: Leske, Thomas
(86) Internationale Anmeldenummer: PCT/EP2008/056186
(87) Internationale Veröffentlichungsnummer: WO 2008/148638

(56) Entgegenhaltungen:
- EP-A- 1 044 764
- EP-A- 1 088 621
- WO-A-2005/000507
- DE-A1- 10 144 644
- DE-A1- 19 859 360

## Beschreibung

Die Erfindung betrifft ein Schleifzentrum zum Schleifen von Haupt- und Hublager aufweisenden Kurbelwellen, wobei mehrere Haupt- und Hublager gleichzeitig geschliffen werden.

Derartige Schleifzentren finden Verwendung zum Vor und/oder Feinschleifen von Kurbelwellen in hohen Stückzahlen. Hierbei handelt es sich oft um Kurbelwellen für Vierzylinder-Reihenmotoren in der Automobilindustrie, bei denen jeweils zwei Hublager in gleicher Winkelposition in Bezug auf die Längsachse der Kurbelwelle angeordnet sind Diese beiden Hublager werden zur Erhöhung der Produktivität gleichzeitig (zeitparallel) geschliffen Eine solche Vorgehensweise ist beispielsweise in der EP 1 044 764 A2 und der EP 1 088 621 B1 beschrieben.

Für die Hauptlager von Kurbelwellen ist das gleichzeitige Schleifen mehrerer Lager schon länger bekannt, z.B. aus der US 3 487 588 Dabei weist die Schleifspindel für die Hauptlager eine Anzahl von Schleifscheiben auf, die der Anzahl der Hauptlager gleich ist. Die Schleifscheiben befinden sich auf einer gemeinsamen Achse Eine neuere Darstellung hierzu findet sich in der DE 101 44 644 B4

Bei dem Schleifzentrum für Kurbelwellen nach der EP 1 044 764 A2 werden zum gleichzeitigen Schleifen zweier Hublager einer Kurbelwelle eine Vorschleifscheibe und eine Fertigschleifscheibe verwendet, die jeweils über die zugehörige Schleifspindel an einem eigenen Kreuzschlitten fest montiert sind Die beiden Kreuzschlitten sind unabhängig voneinander in Kurbelwellen-Längsrichtung (Z-Richtung) verfahrbar und in Richtung auf die Kurbelwelle zustellbar (X-Richtung). Über eine entsprechende Steuerung der Kreuzschlitten und Schleifspindeln ist eine gleichzeitige Bearbeitung von zwei Hublagern in einer Einspannung möglich, wobei das eine Hublager vorgeschliffen und das andere fertig geschliffen wird Hierbei erfolgt eine fortlaufende Überwachung des Schleifvorgangs über zugehörige Messeinrichtungen.

In der EP 1 088 621 B1 ist ein Verfahren und eine Vorrichtung zum gleichzeitigen Schleifen von mindestens zwei Lagern einer Kurbelwelle beschrieben, bei dem weitgehende konstruktive und betriebsmäßige Übereinstimmung mit dem in der EP 1 044 764 A2 gezeigten Schleifzentrum besteht. Beiden Anlagen ist gemeinsam, dass sie jeweils einen eigenen Kreuzschlitten für jede der beiden verwendeten Schleifspindeln verwenden. Jeder dieser Kreuzschlitten erfordert eine separate Ansteuerung für den gesamten Schleifvorgang und eine ständige Überwachung und Korrektur nach Maßgabe von über Messköpfe ermittelten Echtzeit-Daten bezüglich der Rundheit und des Maßes des geschliffenen Lagers. Die Konstruktion des Schleifzentrums mit zwei getrennten Kreuzschlitten - allein für die Bearbeitung von zwei Lagern - erfordert einen großen Platzbedarf und einen erheblichen Aufwand an Bauteilen sowie zugehörigen Steuerungen.

Ausgehend von diesem Stand der Technik ist es Aufgabe der Erfindung, ein Schleifzentrum für das Schleifen von Kurbelwellen anzugeben, bei dem der konstruktive Aufwand und der Platzbedarf wesentlich verringert ist und mit dem das gleichzeitige Schleifen von Hauptlagern und Hublagern in besonders schneller und rationeller Weise bei hoher Qualität möglich ist.

Die Lösung dieser Aufgabe wird durch ein Schleifzentrum mit den Merkmalen nach Anspruch 1 gegeben.

Platzbedarf und baulicher Aufwand werden bei dem erfindungsgemäßen Schleifzentrum in vorteilhafter Weise schon dadurch verringert, dass zwei Stationen zum gleichzeitigen (zeitgleichen) Schleifen von mindestens zwei Lagern zu einem Schleifzentrum zusammengefasst werden. Zusammen mit den Hauptlagern können in der ersten Station auch zentrisch umlaufende Partien des zapfenseitigen und flanschseitigen Kurbelwellen-Endes geschliffen werden, und zwar planseitig und/oder im Durchmesser. Da in der ersten Station alle Hauptlager gleichzeitig geschliffen werden können, besteht im Gegensatz zur zweiten Station eine Zeitreserve, die ausgenutzt werden kann.

Wenn beide Stationen mit gemeinsamer Achsrichtung der zu schleifenden Kurbelwellen angeordnet werden, gestaltet sich auch das Umsetzen der Kurbelwellen von der einen in die andere Station sehr einfach. Darüber hinaus ergeben sich mehrere Vorteile durch die Anordnung von zwei Schleifspindeln zur Bearbeitung von Hublagern auf einem gemeinsamen Kreuzschlitten. Diese zusätzlichen Vorteile sind insbesondere in einer Vereinfachung der Steuerung des Schleifprozesses sowie der Verringerung der Anzahl der Bauteile und des Platzbedarfs zu sehen.

Die Steuerung des gemeinsamen Schleifens von zwei Hublagern erfolgt erfindungsgemäß derart, dass der Vortrieb und die Überwachung/Korrektur des Abtrags und des Rundlaufs der geschliffenen Lager zunächst nur über die Steuerung der Bewegungen des gemeinsamen Hublager-Kreuzschlittens erfolgt. In dieser Phase erfolgt der Hauptabtrag des Schleifens für beide Hublager. Erst wenn die Sollmaße annähernd erreicht sind, werden die erste Schleifspindel und die zweite Schleifspindel bewegungsmäßig unterschiedlich gesteuert. Die erste Hublager-Schleifspindel, die bezüglich der Zustellrichtung (X-Richtung) der Schleifscheiben starr mit dem Hublager-Kreuzschlitten verbunden ist, wird weiterhin über die Steuerung des Hublager-Kreuzschlittens derart nach Maßgabe von über eine Messeinrichtung ermittelten Maß- und Rundheitswerten gesteuert, dass die geforderten End-Sollwerte für den betreffenden Schleifvorgang erreicht werden.

Die Rundheitswerte müssen nicht zwingend bei jedem Hublager gemessen werden. Diese Korrekturwerte, können nach einer Messung in der Steuerung erfasst werden und für eine bestimmte Anzahl von Kurbelwellen gespeichert werden, bis eine weitere Rundheitsmessung erfolgt.

Der Vorschub der zweiten Hublager-Schleifspindel folgt in dieser Phase zwar auch der Bewegung des Hublager-Kreuzschlittens, jedoch ist dieser Bewegung noch eine weitere Bewegungskomponente in X-Richtung überlagert. Diese weitere Bewegungskomponente dient einer differentiellen Korrektur von Maß- und/oder Rundheitsabweichungen, die an den beiden gleichzeitig bearbeiteten Hublagern auftreten. Solche Abweichungen können beispielsweise durch unterschiedliche Abnutzung der beiden Schleifscheiben bedingt sein.. Ein weiterer wesentlicher Grund für diese Abweichung ist, dass sich die Wellen während des Schleifens geringfügig verziehen, da Spannungen im Material freiwerden können. Sie werden nach der Erfindung durch fortlaufende Ermittlung der Maße und der Rundheit der beiden Hublager erfasst, wozu für jedes Hublager entsprechende Messeinrichtungen vorgesehen sind.

Die zu korrigierenden Unterschiede zwischen den beiden Hublagern sind in der Endphase des Schleifens nur gering; sie liegen erfahrungsgemäß im Bereich von hundertstel oder tausendstel Millimetern. Daher genügt ein nur geringer Verstellbereich für die Bewegung der zweiten Hublager-Schleifspindel. Dieser Bereich braucht in vorteilhafter Weise nur etwa +/- 0,2 mm zu umfassen.

Gemäß Anspruch 2 wird eine gegenseitige Verstellbarkeit der beiden Hublager-Schleifspindeln in axialer Richtung auf dem Hublager-Kreuzschlitten vorgeschrieben Dadurch wird eine Anpassung an unterschiedliche axiale Abstände der zu schleifenden Hublager-Paare ermöglicht, ebenso eine Einstellung auf unterschiedliche Kurbelwellen-Typen. Zweckmäßig wird die axiale Verstellbarkeit in die Maschinensteuerung einbezogen und selbsttätig ausgelöst. Im Allgemeinen wird dabei die ohnehin in radialer Richtung verstellbar angeordnete zweite Hublager-Schleifspindel auch axial verstellbar ausgebildet werden, doch ist auch die umgekehrte Konstruktion denkbar, dass die zweite Hublager-Schleifspindel axial fest auf dem Hublager-Kreuzschlitten steht, während die erste Hublager-Schleifspindel zur axialen Verstellung auf dem Hublager-Kreuzschlitten herangezogen wird

Bevorzugt wird in Ausführung der Erfindung eine Ausgestaltung des Antriebs für die Bewegung der einen (zweiten) Schleifspindel in der Maß- und Rundheitskorrekturachse gemäß Anspruch 3 als NC-Achse, da sich eine solche in einfacher Weise in die CNC-Maschinensteuerung integrieren lässt.

Ein Vorteil ergibt sich auch bei einer Ausgestaltung der Schleifzelle nach Anspruch 4, bei der für die Bearbeitung in der ersten Station auch ein Schleifen der Planseiten der Kurbelwelle vorgesehen ist. Hierdurch kann die Zeit T₁ so ausgenutzt und angepasst werden, dass in der entsprechenden Zeit T₂ zwei Paare von Hublagern bearbeitet werden.

Das Schleifen der Planseiten der Lagerstellen der Kurbelwellen kann entweder durch ein Versetzen des Hauptlager-Kreuzschlittens in Z-Richtung oder dadurch erfolgen, dass die Hauptlager-Schleifscheiben auf der Hauptlager-Schleifspindel axial versetzt werden, vgl. die Ansprüche 5 und 6. Es ist aber auch möglich, die Kurbelwelle in axialer Richtung gegenüber den Hauptlager-Schleifscheiben zu versetzen, vgl. Anspruch 7.

Wenn die Bearbeitungszeiten T₁ und T₂ für die Haupt- bzw. Hublager gemäß Anspruch 6 aufeinander abgestimmt werden, ergibt sich ein besonders rationeller Betrieb des Schleifzentrums, da dann die Bestückung oder Entladung der beiden Stationen gleichzeitig durchgeführt werden kann und somit Wartezeiten entfallen.

Nach Anspruch 9 kommt bevorzugt das Pendelhubverfahren für das Schleifen der Hublager zum Einsatz, wodurch sich Vereinfachungen für die Lagerung und den Antrieb der Kurbelwelle für die Bearbeitung der Hublager ergeben. Hierbei können die in der ersten Station geschliffenen Hauptlager ohne weiteres zur Lagerung der Kurbelwelle in der zweiten Station verwendet werden, wodurch eine hohe Genauigkeit in der Bearbeitung der Hublager erreichbar ist. Weiterhin bewirkt die erfindungsgemäße Anordnung und Ansteuerung der beiden Hublager-Schleifspindeln auf nur einem Kreuzschlitten, dass nur ein einziger Zustellschlitten vorliegt. Die Hauptbewegung der beiden Schleifscheiben, nämlich die Pendelhubbewegung und der Vorschub, werden somit von einem einzigen Zustellschlitten bewirkt. Dies führt zu einer wesentlichen Vereinfachung der Steuerung gegenüber dem Stand der Technik, da während des überwiegenden Teils der Bearbeitung nur ein Zustellschlitten zu überwachen und zu steuern ist. Die in der Endphase des Schleifens unterschiedliche Steuerung der Bewegung der beiden Schleifspindeln sorgt dafür, dass eventuelle Abweichungen zwischen den beiden Hublagern erfasst und ausgeglichen werden, so dass am Ende beide Hublager auf Sollmaß geschliffen sind.

Die Einspannung und der rotatorische Antrieb der Kurbelwellen über speziell ausgebildete Hauptlager bzw. Hublager-Spindelstöcke oder entsprechende Reitstöcke nach Anspruch 10 erlaubt einen besonders flexiblen Einsatz des Schleifzentrums. Eine Einspannung der Kurbelwelle mit der Möglichkeit der Rotation um die Hauptlager-Längsachse oder um die Hublager-Längsachse erlaubt die Wahl zwischen einem normalen Schleifen oder dem Pendelhubschleifen für das Hublagerschleifen.

Eine fortlaufende Messung der Dimensionen und der Rundheit der in Bearbeitung befindlichen Lager nach Anspruch 11 ermöglicht eine zeitnahe Erfassung und hochgenaue Korrektur des Schleifergebnisses.

Mit einem erfindungsgemäßen Schleifzentrum können selbstverständlich außer Vierzylinder-Kurbelwellen auch andere Kurbelwellen geschliffen werden, wenn sie jeweils zwei in gleicher Winkellage auf der Kurbelwelle aufgebrachte Hublager aufweisen. Desgleichen ist die Bearbeitung von Nockenwellen möglich, wenn diese jeweils zumindest zwei Hauptlager und zwei in gleicher Winkellage angeordnete Nocken besitzen.

Die Erfindung betrifft auch ein Verfahren zum Schleifen der Haupt- und Hublager und/oder zentrischer Partien von Kurbelwellen gemäß Anspruch 12. Ausgestaltungen dieses Verfahrens sind in Unteransprüchen aufgeführt.

Im Folgenden werden das Schleifzentrum und das Verfahren gemäß der Erfindung anhand der in den Zeichnungen dargestellten Ausführungsbeispiele näher erläutert. Es zeigen:
**Fig. 1** eine schematische Draufsicht auf ein als Schleifzelle ausgebildetes Schleifzentrum nach der Erfindung;
**Fig. 2** eine schematische Draufsicht auf die erste Station der Schleifzelle, die zur Bearbeitung der Hauptlager einer Kurbelwelle dient;
**Fig. 3** eine schematische Draufsicht auf die zweite Station der Schleifzelle, die zur Bearbeitung der Hublager eingesetzt wird;
**Fig. 4** die Einspannung der Kurbelwelle in der ersten Station der Schleifzelle;
**Fig. 5** Einzelheiten der Einspannung der Kurbelwelle in der zweiten Station der Schleifzelle.
**Fig. 6** die Anordnung einer Messeinrichtung für das Maß und die Rundheit eines zu bearbeitenden Lagers in der zweiten Station;
**Fig. 7** ein Schnitt durch eine Schleifzelle nach der Erfindung gemäß dem Schnitt C-C in Fig. 1.

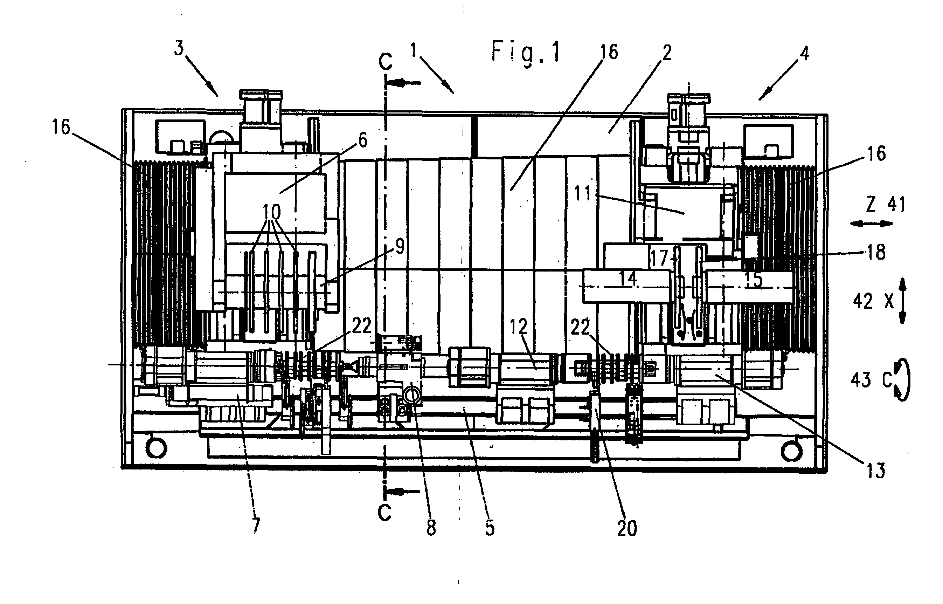

In der **Fig. 1** ist ein als Schleifzelle 1 ausgebildetes Schleifzentrum in Draufsicht dargestellt. Diese Schleifzelle hat ein gemeinsames Maschinenbett 2, auf dem zwei Stationen 3, 4 zur Bearbeitung von Kurbelwellen 22 durch Schleifen angeordnet sind. Die Stationen 3, 4 besitzen einen gemeinsamen Schleiftisch 5, auf dem jeweils Haltevorrichtungen und Antriebe für die Kurbelwellen 22 vorhanden sind. Die Schleifzelle weist üblicherweise auch eine Maschinenhaube sowie Be- und Entladevorrichtungen für die Zufuhr und Entnahme der Kurbelwellen 22 sowie für deren Transport von der ersten Station 3 in die zweite Station 4 auf Diese sind jedoch in Fig. 1 nicht gezeigt, desgleichen nicht die CNC-Steuereinrichtung mit Eingabetastatur und hydraulische und/oder pneumatische Versorgungseinrichtungen

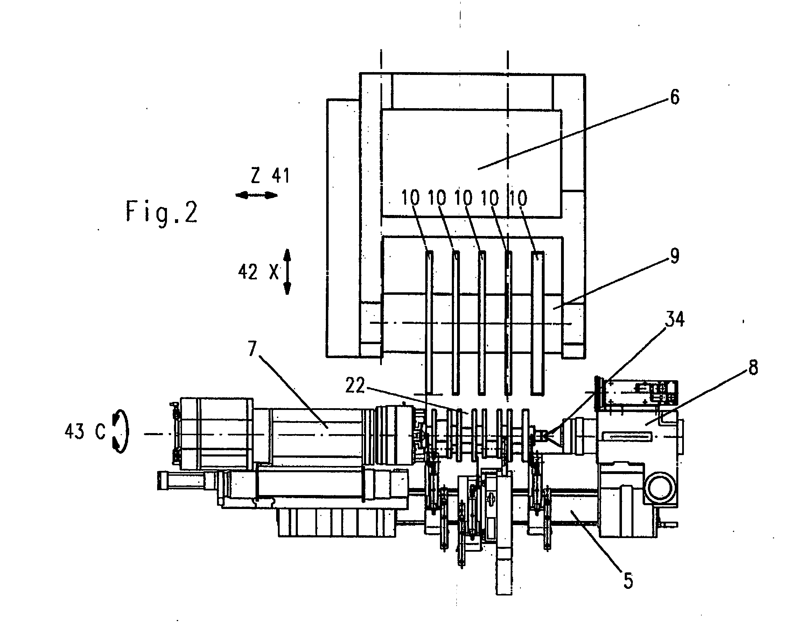

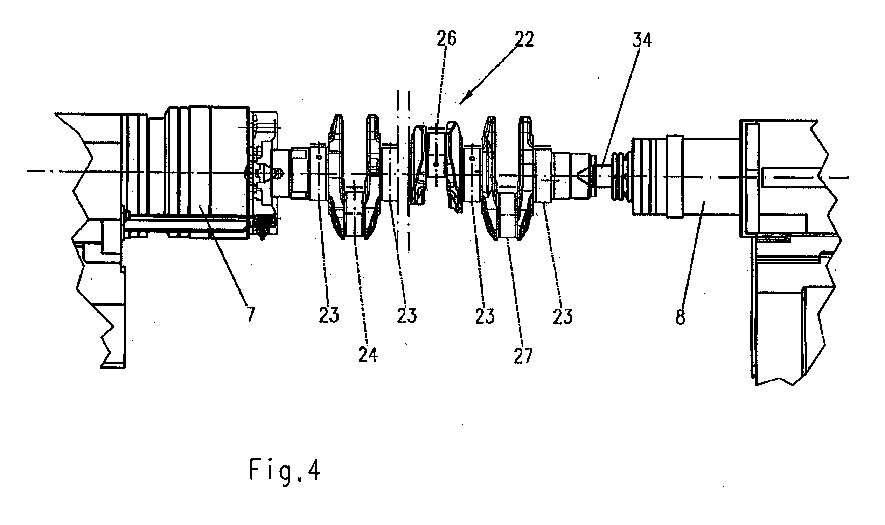

Die erste Station 3 der Schleifzelle 1, die in **Fig. 2** einzeln dargestellt ist, dient zum Schleifen der Hauptlager 23 der Kurbelwellen 22. Aus Gründen der Anschaulichkeit werden die wichtigsten Funktionsteile der ersten Station 3 deshalb mit der Zusatzbezeichnung "Hauptlager-" versehen. Die Hauptlager 23 **(****Fig.4****)** werden mittels mehrerer Hauptlager-Schleifscheiben 10 geschliffen, die an einer Hauptlager-Schleifspindel 9 angeordnet sind. Die Hauptlager-Schleifspindel 9 ist ihrerseits an einem Hauptlager-Kreuzschlitten 6 befestigt, der CNC-gesteuert in Z-Richtung, die der Kurbelwellen-Längsachse 29 entspricht, und in X-Richtung, die eine Zustellung in Richtung senkrecht zur Kurbelwellen-Längsachse 29 erlaubt, verfahrbar ist. Führungsbahnen oder Gleitschienen, auf denen der Hauptlager-Kreuzschlitten 6 in Z-Richtung verfahren wird, sind nicht zu sehen, weil sie durch Abdeckungen 16 verdeckt sind. Die zu bearbeitende Kurbelwelle 22 ist zwischen einem Hauptlager-Werkstückspindelstock 7 und einem Hauptlager-Reitstock 8 eingespannt, wie dies in **Fig. 4** deutlicher dargestellt ist, und wird gemäß der Darstellung von Fig. 2 von dem Hauptlager-Werkstückspindelstock 7 in Rotation versetzt. In der ersten Station 3 werden mindestes zwei Hauptlager 23 der Kurbelwelle 22 gleichzeitig vor- oder fertiggeschliffen, wofür eine Zeit T₁ erforderlich ist.

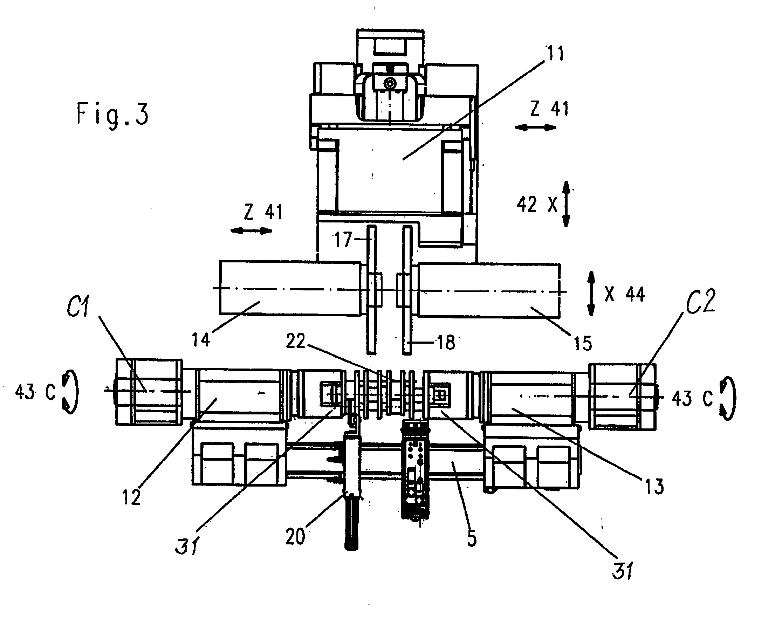

Die zweite Station 4 der Schleifzelle 1, die in **Fig. 3** einzeln dargestellt ist, wird zum Bearbeiten der Hublager 24 bis 27 der Kurbelwelle 22 eingesetzt, wobei jeweils zwei Hublager 24 bis 27, die sich in gleicher Winkelposition in Bezug auf die Kurbelwellen-Längsachse 29 befinden, gleichzeitig geschliffen werden. Die zum Schleifen von allen vier Hublagern 24 bis 27 benötigte Zeit ist T₂ Aus Gründen der Anschaulichkeit werden die wichtigsten Funktionsteile der zweiten Station 4 mit der Zusatzbezeichnung "Hublager-" versehen.

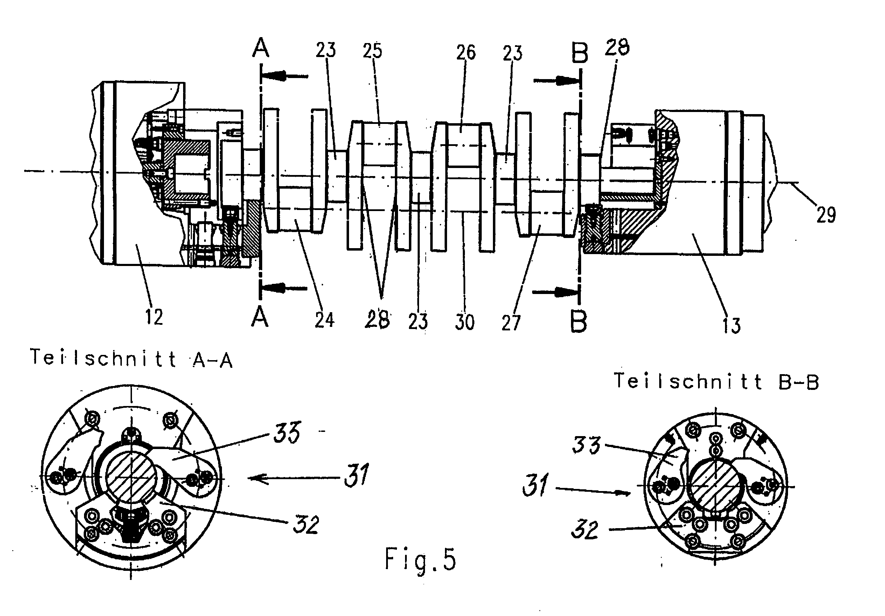

Auch in der zweiten Station 4 wird die zu schleifende Kurbelwelle 22 zentrisch eingespannt, d.h. die gemeinsame Längsachse der beidseitigen Spanneinrichtungen ist mit der Längsachse 29 der Kurbelwelle 22 identisch, die durch ihre Hauptlager 23 definiert ist. Wie die Figuren 3 und 5 erkennen lassen, ist die Kurbelwelle 22 in der zweiten Station 4 an ihren außen liegenden Hauptlagern 23 eingespannt, die in der ersten Station 3 geschliffen worden sind. Hierdurch wird ein exakter Bezug der Hublager 24 bis 27 zu den Hauptlagern 23 der Kurbelwelle 22 hergestellt.

Zum Einspannen ist gemäß der **Fig. 3** beidseitig der Kurbelwelle 22 je ein Hublager-Werkstückspindelstock 12, 13 vorgesehen. Die Spannfutter 31 dieser Hublager-Werkstückspindelstöcke 12, 13 sind mit Auflageschalen 32 (vgl. Fig. 5) versehen und werden durch je eine C1- bzw. C2- Achse angetrieben, die absolut synchron rotieren. Die Kurbelwelle 22 kann in der zweiten Station 4 aber auch zwischen Spitzen aufgenommen werden und wird dann zumindest nur auf einer Seite durch einen Hublager-Werkstückspindelstock 12 angetrieben, dessen Spannfutter mit schwimmend gelagerten Spannbacken 33 versehen ist und einen ausgleichenden radial spielfreien Drehantrieb bewirkt. Die Ausrichtung der Kurbelwelle 22 erfolgt dann durch deren Zentren auf den Zentrierspitzen.

Die Form der Aufnahme der Kurbelwelle 22 in der zweiten Station 4 kann je nach dem speziellen Einzelfall variiert und optimiert werden.

In beiden Stationen 3 und 4 kann die Kurbelwelle 22 durch eine oder mehrere selbst zentrierende Lünetten abgestützt werden.

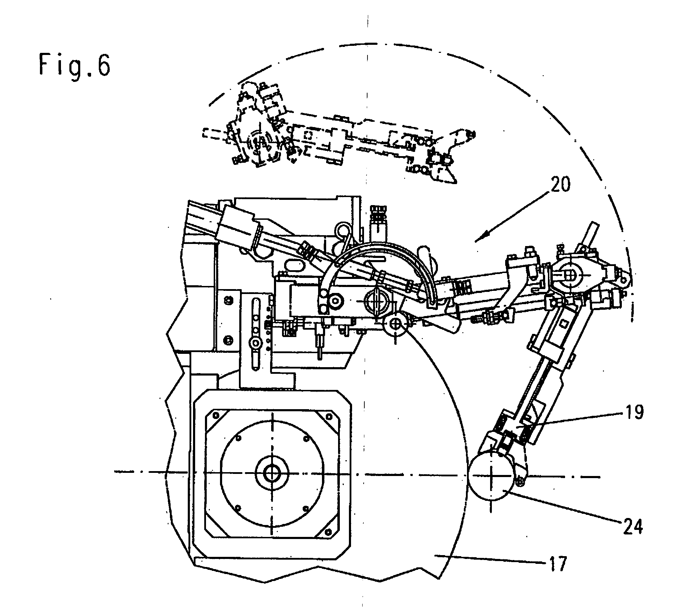

In der zweiten Station ist ein Hublager-Kreuzschlitten 11 vorgesehen, der in Richtung der senkrecht zueinander stehenden Achsen Z2 und X2, also parallel zur Kurbelwellen-Längsachse 29 und senkrecht dazu verfahrbar ist. Der Hublager-Kreuzschlitten 11 trägt eine erste Hublager-Schleifspindel 14 und eine zweite Hublager-Schleifspindel 15. Hiervon ist die erste Hublager-Schleifspindel 14 in der Richtung senkrecht zur Kurbelwellen-Längsachse 29 fest mit dem Hublager-Kreuzschlitten 11 verbunden. Die zweite Hublager-Schleifspindel 15 hingegen ist in der Richtung senkrecht zur Kurbelwellen-Längsachse 29 beweglich auf dem Hublager-Kreuzschlitten 11 angeordnet. Ihre Bewegung wird nach Maßgabe eines Maß- oder Rundheitsfehlers gesteuert, der aus einer In-Prozess-Messung während des Schleifens gewonnen wird. Hierzu werden von In-Prozess-Messköpfen 19 einer Messeinrichtung 20 **(****Fig. 6****)** die Durchmesser der paarweise zu schleifenden Hublager 24, 27 bzw. 25, 26 laufend während des Schleifens gemessen.

Jede der beiden Hublager-Schleifspindeln 14, 15 trägt eine Hublager-Schleifscheibe 17, 18, deren axialer Abstand voneinander dem Abstand der paarweise zu schleifenden Hublager 24 bis 27 voneinander entsprechen muss Zu diesem Zweck müssen die beiden Hublager-Schleifspindeln 14, 15 in ihrer Achsrichtung, also in Richtung der Rotationsachse ihrer Hublager-Schleifscheiben 17, 18, auf dem Hublager-Kreuzschlitten 11 gegeneinander verfahrbar sein. Der axiale Abstand zwischen den Hublager-Schleifspindeln und -Schleifscheiben muss jedes Mal dann verstellt werden, wenn eine Kurbelwelle eines anderen Typs zu schleifen ist oder bei einer bestimmten Kurbelwelle ein Hublagerpaar mit geändertem Abstand zum Schleifen ansteht. Insofern muss die Änderung des Abstands in die gesamte Steuerung des Schleifvorgangs mit einbezogen werden. Dabei kann die erste Hublager-Schleifspindel 14 oder die zweite Hublager-Schleifspindel 15 in Richtung ihrer Längsachse auf dem Hublager-Kreuzschlitten 11 verstellbar angeordnet sein.

**Fig. 5** lässt besonders deutlich eine Besonderheit von Kurbelwellen 22 für Vier-Zylinder-Reihenmotoren erkennen: die beiden äußeren Hublager 24 und 27 haben eine gemeinsame Winkellage in Bezug auf die Rotations- und Längsachse 29 der Kurbelwelle 22 und ebenso die beiden inneren Hublager 25 und 26, wobei die Winkellage der beiden Hublagerpaare 24 und 27 einerseits sowie 25 und 26 andererseits unterschiedlich ist.

Diese Eigenheit wird zur ökonomischen Betriebsweise des erfindungsgemäßen Schleifzentrums herangezogen Mit den beiden Hublager-Schleifscheiben 17 und 18 Werden nämlich die beiden Hublager 24, 27 und 25, 26 jeweils für sich gleichzeitig geschliffen, wobei das Wort "gleichzeitig" auch für die in Schleiftechnik anzutreffenden Ausdrücke "zeitparallel" oder "zeitgleich" steht. Gemeint ist damit in jedem Fall, dass der Schleifvorgang etwa in derselben Zeit abläuft, nicht aber, dass er exakt in demselben Zeitpunkt beendet sein muss. Das zweite Hublager wird des öfteren erst nach dem ersten fertig geschliffen, indem z. B. noch ein Restaufmass von 0,02 mm abzutragen ist.

**Fig. 6** zeigt die Anordnung einer Messeinrichtung 20 zur fortlaufenden Messung der Rundheit und der Maße eines Hublagers in der zweiten Station 4 mittels eines Messkopfes 19. Der Messkopf 19 kommt während des Schleifens in Anlage an das zu überwachende Hublager 24-27 und erzeugt fortlaufend Signale bezüglich der Abmessungen und/oder der Rundheit des Hublagers 24-27, die von der CNC-Steuerung ausgewertet und zur Erzeugung von Steuerbefehlen für die Antriebe des Hublager-Kreuzschlittens 11 und/oder der Maß- oder Rundheitskorrekturachse 44 verwendet werden. Die in **Fig. 6** gestrichelt dargestellte Position der Messeinrichtung 20 entspricht einer zurückgezogenen Stellung, welche die Messeinrichtung 20 etwa während eines Abrichtvorgangs und/oder während des Teilehandlings der Hublager-Schleifscheiben 17, 18 einnimmt

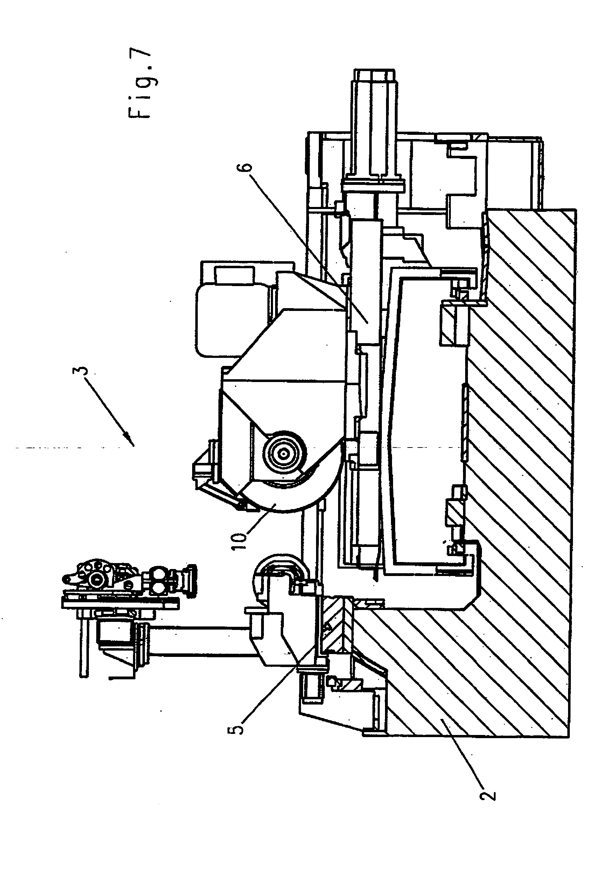

In **Fig. 7** ist eine schematische Seitenansicht der ersten Station 3 der Schleifzelle 1 gemäß dem Schnitt C-C in **Fig.1** dargestellt.

Zu Beginn des Hublager-Schleifens in der zweiten Station 4 wird der gegenseitige axiale Abstand der beiden Hublager-Schleifscheiben 17, 18 beispielsweise auf den Abstand der Hublager 24 und 27 eingestellt. Danach beginnt das Schleifen dieser Hublager 24, 27 im CNC-gesteuerten Pendelhubverfahren. Hierzu werden zunächst die beiden Hublager-Schleifspindeln 14, 15 gemeinsam senkrecht zur Kurbelwellen-Längsachse 29 verfahren; die zweite Hublager-Schleifspindel 15 bleibt dabei gegenüber dem Hublager-Kreuzschlitten 11 unbeweglich.. Das gilt für die Phase des Groboder Vorschleifens. Es wird aber an jedem der Hublager 24, 27 während des Schleifens der gerade erreichte Durchmesser gemessen und die Rundheit bestimmt. Mit der Annäherung an das Fertigmaß in der Phase des Feinschleifens wird die Bewegung der zweiten Schleifspindel 15 von der des Hublager-Kreuzschlittens 11 entkoppelt. Der Hublager-Kreuzschlitten 11 wird nach Maßgabe der Messung an dem Hublager 24 im Sinne einer Maß- oder Rundheitskorrekturachse 44 verfahren, wobei mittels der ersten Hublager-Schleifspindel 14 schließlich das Endmaß und die erforderliche Rundheit des Hublagers 24 erreicht werden. Gleichzeitig führt die zweite Hublager-Schleifspindel 27 nach Maßgabe der getrennten Messung am Hublager 27 Korrekturbewegungen gegenüber dem Hublager-Kreuzschlitten 11 aus, soweit die Messungen am Hublager 27 von denen des Hublagers 24 abweichen. Diese Abweichungen ergeben sich aus der fortlaufenden Messung an beiden Hublagern 24 und 27. Der Rechner der Maschinensteuerung analysiert die Messergebnisse und bildet entsprechende Korrektur- und Steuersignale für den Antrieb der zweiten Hublager-Schleifspindel 15.

Die zweite Hublager-Schleifspindel 15 braucht naturgemäß gegenüber dem Hublager-Kreuzschlitten 11 nur in einem geringen Maß in Richtung der X-Achse beweglich zu sein Ein in der Praxis vorteilhafter Verstellweg kann bspw. im Bereich von +/- 0,2 mm liegen Das Schleifzentrum kann so eingestellt werden, dass die Schleifzeit T₁ gleich der Schleifzeit T₂ ist. Zwei der Hauptlager werden 23 werden dann etwa in derselben Zeit geschliffen wie ein Paar 24, 27 oder 25, 26 der Hublager.

Anschließend wird der Hublager-Kreuzschlitten 11 zurückgefahren, der Abstand der beiden Hublager-Schleifspindeln 14, 15 voneinander auf den Abstand der mittleren Hublager 25, 26 eingestellt, und der Schleifzyklus beginnt von neuem.

### Bezugszeichenliste

- 1: Schleifzelle
- 2: Maschinenbett
- 3: erste Station
- 4: zweite Station
- 5: Schleiftisch
- 6: Hauptlager-Kreuzschlitten
- 7: Hauptlager-Werkstückspindelstock
- 8: Hauptlager-Reitstock
- 9: Hauptlager-Schleifspindel
- 10: Hauptlager-Schleifscheiben

- 11: Hublager-Kreuzschlitten
- 12: Hublager-Werkstückspindelstock
- 13: Hublager-Werkstückspindelstock
- 14: erste Hublager-Schleifspindel
- 15: zweite Hublager-Schleifspindel
- 16: Abdeckung
- 17: erste Hublager-Schleifscheibe
- 18: zweite Hublager-Schleifscheibe
- 19: Messkopf
- 20: Messeinrichtung

- 22: Kurbelwelle
- 23: Hauptlager
- 24: Hublager
- 25: Hublager
- 26: Hublager
- 27: Hublager
- 28: Planseite
- 29: Hauptlager-Längsachse
- 30: Hublager-Längsachse

- 31: Spannfutter
- 32: Auflageschalen
- 33: Spannbacken
- 34: (Zentrier)Spitzen

- 41: Z-Achse
- 42: X-Achse
- 43: Rotationsachse
- 44: Maß- und Rundheitskorrekturachse

## Patentansprüche

1. Schleifzentrum mit Steuerung zum gleichzeitigen Schleifen von Hauptlagern (23) und Hublagern ( 24 bis 27) von Kurbelwellen (22), welches:
- eine erste Station (3) aufweist, in welcher eine Gruppe von Hauptlager-Schleifscheiben (10) axial so auf einer auf einem Hauptlager-Kreuzschlitten (6) angeordneten Hauptlager-Schleifspindel (9) angeordnet ist, dass in Betrieb eine der Anzahl der Hauptlager-Schleifscheiben (10) entsprechende Anzahl von Hauptlagern (23) zeitparallel in einer Zeit T₁ geschliffen werden, und
- eine zweite Station (4) aufweist, in welcher zwei Hublager-Schleifscheiben (17, 18) angeordnet sind, die in Betrieb zeitparallel und paarweise zwei Hublager (24 - 27 oder 25 & 26) der Kurbelwelle (22) zeitparallel zu T₁ in einer Zeit T₂ schleifen und mit ihrer jeweiligen Hublager-Schleifspindel (14, 15) auf einem Hublager-Kreuzschlitten (11) derart gelagert sind, dass eine erste Hublager-Schleifspindel (14) in der Zustellrichtung (X-Achse) ortsfest auf dem Hublager-Kreuzschlitten (11) angeordnet ist und eine zweite Hublager-Schleifspindel (15) in der Zustellrichtung (X-Achse) relativ zur ersten Hublager-Schleifspindel (14) geringfügig nur im Sinne einer Maß- oder Rundheitskorrekturachse (44) verstellbar ist.

2. Schleifzentrum nach Anspruch 1, bei dem die beiden an dem Hublager-Kreuzschlitten (11) befindlichen Hublager-Schleifspindeln (14, 15) in axialer Richtung (Z2-Achse) gegeneinander verstellbar sind.

3. Schleifzentrum nach Anspruch 1 oder 2, bei welchem der Antrieb der zweiten Hublager-Schleifspindel (15) der zweiten Station (4) derart ausgestaltet ist, dass die zweite Hublager-Schleifspindel (15) mittels einer in engen Grenzen wirksamen NC-Achse zur Maß- und/oder Rundheitskorrektur unabhängig von der Bewegung des Hublager-Kreuzschlittens (11) an die Kurbelwelle 22 zugestellt werden kann.

4. Schleifzentrum nach einem der Ansprüche 1 bis 3, mit einer derartigen Ausgestaltung, dass die Hauptlager-Schleifscheiben (10) der Hauptlager-Schleifspindel (9) der ersten Station (3) zum Schleifen der Hauptlager (23) radial zugestellt und zum Schleifen der Planseiten (28) der Kurbelwelle (22) axial versetzt werden.

5. Schleifzentrum nach Anspruch 4, bei dem der axiale Versatz der Hauptlager-Schleifscheiben (10) durch den Hauptlager-Kreuzschlitten (6) erfolgt.

6. Schleifzentrum nach Anspruch 4, bei dem der axiale Versatz der Hauptlager-Schleifscheiben (10) **dadurch** erfolgt, dass die Hauptlager-Schleifscheiben (10) auf der Hauptlager-Schleifspindel (9) axial versetzbar angeordnet sind.

7. Schleifzentrum nach einem der Ansprüche 1 bis 3, mit einer derartigen Ausgestaltung, dass die Kurbelwelle (22) zum Schleifen ihrer Planseiten (28) mittels der Hauptlager-Schleifscheiben (10) in der Kurbelwellen-Längsrichtung axial versetzt wird.

8. Schleifzentrum nach einem der Ansprüche 1 bis 7, bei welchem T₁ etwa T₂ entspricht.

9. Schleifzentrum nach einem oder mehreren der Ansprüche 1 bis 8, bei welchem der Hublager-Kreuzschlitten (11) so ausgebildet ist, dass eine Pendelhubbewegung der Hublager-Schleifscheiben (17, 18) erzeugt werden kann.

10. Schleifzentrum nach einem der Ansprüche 1 bis 9, bei welchem die erste und die zweite Station (3, 4) jeweils einen Werkstück-Spindelstock (7, 12, 13) und einen Reitstock (8) aufweist und die jeweiligen Werkstück-Spindelstöcke (7, 12, 13) und Reitstöcke (8) der ersten und der zweiten Station (3 bzw. 4) so ausgebildet sind, dass die eine Hauptlager- und mindestens eine Hublager-Längsachse (29, 30) aufweisende Kurbelwelle (22) im Betrieb zentrisch um die Hauptlager-Längsachse (29) rotiert.

11. Schleifzentrum nach einem der Ansprüche 1 bis 10, bei weichem eine Messeinrichtung (20) zur fortlaufenden Maß- und/oder Rundheitsmessung vorgesehen ist und ein Signal zur Steuerung der Bewegung der Hublager-Schleifspindel (14 oder 15) in der Zustellachse (X-Achse) oder in der Maß- und Rundheitskorrekturachse (44) liefert.

12. Verfahren zum gleichzeitigen Schleifen der Hauptlager(23) und Hublager (24 bis 27) und/oder zentrischer Partien von Kurbelwellen (22) in einem Schleifzentrum mit zwei Stationen (3, 4), mit den folgenden Verfahrensschritten:
a. in der ersten Station (3) werden die Hauptlager (23) der Kurbelwelle (22) und/oder zentrische Partien mit einem Satz von Hauptlager-Schleifscheiben (10) geschliffen, die sich auf der gemeinsamen Welle einer Hauptlager-Schleifspindel (9) befinden;
b. die Kurbelwelle (22) wird in die zweite Station (4) gebracht;
c. in der zweiten Station (4) werden jeweils zwei Hublager (24 und 27 bzw. 25 und 26), welche dieselbe Winkellage in Bezug auf die Rotationsachse der Kurbelwelle (22) aufweisen, zeitparallel zu den Hauptlagern (23) in der ersten Station (3) zeitgleich mit zwei Hublager-Schleifscheiben (17, 18) geschliffen;
d. die Zustellbewegung jeder der beiden Hublager-Schleifscheiben (17, 18) wird individuell rechnergesteuert, wobei die Zustellbewegung der zweiten Hublager-Schleifscheibe (18) nur nach Maßgabe einer Abweichung von der Zustellbewegung der ersten Hublager-Schleifscheibe (17) erfolgt;
e) in dem Schleifzentrum werden stets zwei Kurbelwellen gleichzeitig bearbeitet, wobei die Schleifzeit T₁ in der ersten Station (3) etwa gleich der Schleifzeit T₂ in der zweiten Station (4) ist.

13. Verfahren nach Anspruch 12, bei dem sich die beiden Hublager-Schleifscheiben (17, 18) an Hublager-Schleifspindeln (14, 15) befinden, die auf einem Hublager-Kreuzschlitten (11) angeordnet sind, wobei die erste Hublager-Schleifspindel (14) mit der ersten Hublager-Schleifscheibe (17) in der Zustellrichtung (X-Achse) ortsfest auf dem Hublager-Kreuzschlitten (11) angeordnet ist und durch diesen zugestellt wird, während die zweite Hublager-Schleifspindel (15) mit der zweiten Hublager-Schleifscheibe (18) mittels einer in engen Grenzen wirksamen NC-Achse zur Maß- und/oder Rundheitskorrektur unabhängig von der Bewegung des Hublager-Kreuzschlittens (11) an die Kurbelwelle (22) zugestellt werden kann.

14. Verfahren nach Anspruch 12 oder 13, bei dem die Hauptlager-Schleifscheiben (10) der Hauptlager-Schleifspindel (9) zum Schleifen der Hauptlager (23) radial zugestellt und zum Schleifen der Planseiten (28) der Kurbelwelle (22) axial versetzt werden.

15. Verfahren nach Anspruch 14, bei dem die Hauptlager-Schleifscheiben (10) axial versetzt werden, indem der Hauptlager-Kreuzschlitten (6) axial versetzt wird.

16. Verfahren nach Anspruch 14, bei dem die Hauptlager-Schleifscheiben (10) axial versetzt werden, indem sie auf der Hauptlager-Schleifspindel (9) axial versetzt werden.

17. Verfahren nach Anspruch 12 oder 13, bei dem die Planseiten (28) der Kurbelwelle (22) mittels der Hauptlager-Schleifscheiben (10) geschliffen werden, indem die Kurbelwelle (22) hierbei axial versetzt wird.

## Claims

1. Grinding center having a control system for simultaneously grinding main bearings (23) and rod bearings (24 to 27) of crankshafts (22), said grinding center:
- having a first station (3) in which a group of main-bearing grinding wheels (10) is arranged axially on a main-bearing grinding spindle (9), which is arranged on a main-bearing cross slide (6), such that, during operation, a number of main bearings (23) corresponding to the number of main-bearing grinding wheels (10) is ground at the same time in a time T1, and
- having a second station (4) in which two rod-bearing grinding wheels (17, 18) are arranged, which during operation, at the same time and in pairs grind two rod bearings (24-27 or 25 & 26) of the crankshaft (22) in a time T2 at the same time to T1 and are mounted by their respective rod-bearing grinding spindle (14, 15) on a rod-bearing cross slide (11) in such a manner that a first rod-bearing grinding spindle (14) in the infeed direction (X axis) is arranged in a positionally fixed manner on the rod-bearing cross slide (11) and a second rod-bearing grinding spindle (15) in the infeed direction (X axis) is slightly adjustable relative to the first rod-bearing grinding spindle (14) only in the direction of a dimensional or roundness correction axis (44).

2. Grinding center according to Claim 1, in which the two rod-bearing grinding spindles (14, 15) located on the rod-bearing cross slide (11) are adjustable in relation to each other in the axial direction (Z2 axis).

3. Grinding center according to Claim 1 or 2, in which the drive of the second rod-bearing grinding spindle (15) of the second station (4) is configured in such a manner that the second rod-bearing grinding spindle (15) can be advanced to the crankshaft (22) independently of the movement of the rod-bearing cross slide (11) by means of an NC axis, which is effective within narrow limits, for the dimensional and/or roundness correction.

4. Grinding center according to one of Claims 1 to 3, with a configuration such that the main-bearing grinding wheels (10) of the main-bearing grinding spindle (9) of the first station (3) are advanced radially for the grinding of the main bearings (23) and are offset axially for the grinding of the face sides (28) of the crankshaft (22).

5. Grinding center according to Claim 4, in which the main-bearing grinding wheels (10) are offset axially by means of the main-bearing cross slide (6).

6. Grinding center according to Claim 4, in which the main-bearing grinding wheels (10) are offset axially by the main-bearing grinding wheels (10) being arranged in an axially offsettable manner on the main-bearing grinding spindle (9).

7. Grinding center according to one of Claims 1 to 3, with a configuration such that the crankshaft (22) is offset axially in the longitudinal direction of the crankshaft for the grinding of the face sides (28) thereof by means of the main-bearing grinding wheels (10).

8. Grinding center according to one of Claims 1 to 7, in which T1 approximately corresponds to T2.

9. Grinding center according to one or more of Claims 1 to 8, in which the rod-bearing cross slide (11) is designed in such a manner that a pendulum stroke movement of the rod-bearing grinding wheels (17, 18) can be produced.

10. Grinding center according to one of Claims 1 to 9, in which the first and the second station (3, 4) each have a work headstock (7, 12, 13) and a footstock (8), and the respective work headstocks (7, 12, 13) and footstocks (8) of the first and second station (3 and 4) are designed in such a manner that the crankshaft (22) having a main-bearing longitudinal axis and at least one rod-bearing longitudinal axis (29, 30) rotates centrally about the main-bearing longitudinal axis (29) during operation.

11. Grinding center according to one of Claims 1 to 10, in which a measuring device (20) is provided for the continuous dimensional and/or roundness measuring and delivers a signal for controlling the movement of the rod-bearing grinding spindle (14, 15) in the advancing axis (X axis) or in the dimensional and roundness correction axis (44).

12. Method for simultaneously grinding the main bearings (23) and rod bearings (24 to 27) and/or central parts of crankshafts (22) in a grinding center having two stations (3, 4), with the following method steps:
a. in the first station (3) the main bearings (23) of the crankshaft (22) and/or central parts are ground with a set of main-bearing grinding wheels (10) which are located on the common shaft of a main-bearing grinding spindle (9);
b. the crankshaft (22) is brought into the second station (4);
c. in the second station (4) two rod bearings (24 and 27 or 25 and 26) having the same angular position with respect to the axis of rotation of the crankshaft (22) are in each case ground isochronously by two rod-bearing grinding wheels (17, 18) at the same time as the main bearings (23) in the first station (3);
d. the advancing movement of each of the two rod-bearing grinding wheels (17, 18) is individually computer-controlled, wherein the advancing movement of the second rod-bearing grinding wheel (18) takes place only in accordance with a deviation from the advancing movement of the first rod-bearing grinding wheel (17);
e. in the grinding center two crankshafts are always machined simultaneously, wherein the grinding time T1 in the first station (3) is approximately equal to the grinding time T2 in the second station (4).

13. Method according to Claim 12, in which the two rod-bearing grinding wheels (17, 18) are located on rod-bearing grinding spindles (14, 15) which are arranged on a rod-bearing cross slide (11), wherein the first rod-bearing grinding spindle (14) with the first rod-bearing grinding wheel (17) in the advancing direction (X axis) is arranged in a positionally fixed manner on the rod-bearing cross slide (11) and is advanced by the latter while the second rod-bearing grinding spindle (15) with the second rod-bearing grinding wheel (18) can be advanced to the crankshaft (22) independently of the movement of the rod-bearing cross slide (11) by means of an NC axis, which is effective within narrow limits, for the dimensional and/or roundness correction.

14. Method according to Claim 12 or 13, in which the main-bearing grinding wheels (10) of the main-bearing grinding spindle (9) are advanced radially for the grinding of the main bearings (23) and are offset axially for the grinding of the face sides (28) of the crankshaft (22).

15. Method according to Claim 14, in which the main-bearing grinding wheels (10) are offset axially by the main-bearing cross slide (6) being offset axially.

16. Method according to Claim 14, in which the main-bearing grinding wheels (10) are offset axially by being offset axially on the main-bearing grinding spindle (9).

17. Method according to Claim 12 or 13, in which the face sides (28) of the crankshaft (22) are ground by means of the main-bearing grinding wheels (10) by the crankshaft (22) being offset axially in this case.

## Revendications

1. Station de meulage comprenant une commande pour le meulage simultané de paliers principaux (23) et de paliers de levée (24 à 27) de vilebrequins (22), qui présente :
- un premier poste (3) dans lequel un groupe de disques de meulage de paliers principaux (10) est disposé axialement sur une broche de meulage de paliers principaux (9) disposée sur un chariot à deux axes croisés (6) pour paliers principaux, de telle sorte que pendant le fonctionnement, un nombre de paliers principaux (23) correspondant au nombre des disques de meulage de paliers principaux (10) soit meulé parallèlement dans le temps en un temps T₁, et
- un deuxième poste (4), dans lequel sont disposés deux disques de meulage de paliers de levée (17, 18), qui, pendant le fonctionnement, meulent parallèlement dans le temps et par paires deux paliers de levée (24 - 27 ou 25 & 26) du vilebrequin (22), parallèlement dans le temps à T₁ en un temps T₂, et qui sont supportés avec leur broche de meulage de palier de levée respective (14, 15) sur un chariot à deux axes croisés (11) pour paliers de levée, de telle sorte qu'une première broche de meulage de paliers de levée (14) soit disposée fixement dans la direction d'avance (axe X) sur le chariot à deux axes croisés (11) pour paliers de levée et qu'une deuxième broche de meulage de paliers de levée (15) puisse être déplacée légèrement dans la direction d'avance (axe X) par rapport à la première broche de meulage pour paliers de levée (14), seulement dans le sens d'un axe de correction de dimension ou de rotondité (44).

2. Station de meulage selon la revendication 1, dans laquelle les deux broches de meulage de paliers de levée (14, 15) se trouvant sur le chariot à deux axes croisés (11) pour paliers de levée peuvent être déplacées l'une par rapport à l'autre dans la direction axiale (axe Z2).

3. Station de meulage selon la revendication 1 ou 2, dans laquelle l'entraînement de la deuxième broche de meulage pour paliers de levée (15) du deuxième poste (4) est configurée de telle sorte que la deuxième broche de meulage pour paliers de levée (15) puisse être avancée vers le vilebrequin (22) au moyen d'un axe CN agissant dans des limites restreintes en vue de la correction de dimension et/ou de rotondité, indépendamment du déplacement du chariot à deux axes croisés (11) pour paliers de levée.

4. Station de meulage selon l'une quelconque des revendications 1 à 3, ayant une configuration telle que les disques de meulage de paliers principaux (10) de la broche de meulage de paliers principaux (9) du premier poste (3) soient avancés radialement pour meuler les paliers principaux (23), et soient décalés axialement pour meuler les côtés plans (28) du vilebrequin (22).

5. Station de meulage selon la revendication 4, dans laquelle le décalage axial des disques de meulage de paliers principaux (10) est effectué par le chariot à deux axes croisés (6) pour paliers principaux.

6. Station de meulage selon la revendication 4, dans laquelle le décalage axial des disques de meulage de paliers principaux (10) est effectué par le fait que les disques de meulage de paliers principaux (10) sont disposés de manière décalable axialement sur la broche de meulage de paliers principaux (9).

7. Station de meulage selon l'une quelconque des revendications 1 à 3, ayant une configuration telle que le vilebrequin (22) soit décalé axialement dans la direction longitudinale du vilebrequin pour meuler ses côtés plans (28) au moyen des disques de meulage de paliers principaux (10).

8. Station de meulage selon l'une quelconque des revendications 1 à 7, dans laquelle T₁ correspond approximativement à T₂.

9. Station de meulage selon une ou plusieurs des revendications 1 à 8, dans laquelle le chariot à deux axes croisés (11) pour paliers de levée est réalisé de telle sorte qu'un déplacement de levée pendulaire des disques de meulage de paliers de levée (17, 18) puisse être produit.

10. Station de meulage selon l'une quelconque des revendications 1 à 9, dans laquelle le premier et le deuxième poste (3, 4) présentent chacun une poupée d'outil (7, 12, 13) et une poupée mobile (8), et les poupées d'outil (7, 12, 13) et poupées mobiles (8) respectives du premier et du deuxième poste (3, respectivement 4), sont réalisées de telle sorte que le vilebrequin (22) présentant un axe longitudinal de palier principal et au moins un axe longitudinal de palier de levée (29, 30) tourne pendant le fonctionnement centralement autour de l'axe longitudinal de palier principal (29).

11. Station de meulage selon l'une quelconque des revendications 1 à 10, dans laquelle il est prévu un dispositif de mesure (20) pour la mesure en continu de dimension et/ou de rotondité, qui fournit un signal pour la commande du mouvement de la broche de meulage de palier de levée (14 ou 15) dans l'axe d'avance (axe X) ou dans l'axe de correction de dimension ou de rotondité (44).

12. Procédé pour le meulage simultané des paliers principaux (23) et paliers de levée (24 à 27) et/ou de parties centrales de vilebrequins (22) dans une station de meulage comprenant deux postes (3, 4), comprenant les étapes de procédé suivantes :
a. dans le premier poste (3), les paliers principaux (23) du vilebrequin (22) et/ou les parties centrales sont meulé(e)s avec un jeu de disques de meulage de paliers principaux (10), qui se trouvent sur l'arbre commun d'une broche de meulage de paliers principaux (9) ;
b. le vilebrequin (22) est amené au deuxième poste (4) ;
c. dans le deuxième poste (4), à chaque fois deux paliers de levée (24 et 27, respectivement 25 et 26), qui présentent la même position angulaire par rapport à l'axe de rotation du vilebrequin (22), sont meulés parallèlement dans le temps avec les paliers principaux (23) dans le premier poste (3) simultanément avec les deux disques de meulage de paliers de levée (17, 18) ;
d. le mouvement d'avance de chacun des deux disques de meulage de paliers de levée (17, 18), est commandé individuellement par ordinateur, le mouvement d'avance du deuxième disque de meulage de paliers de levée (18) n'ayant lieu qu'en fonction d'un écart par rapport au mouvement d'avance du premier disque de meulage de paliers de levée (17) ;
e. deux vilebrequins sont toujours usinés simultanément dans la station de meulage, le temps de meulage T₁ dans le premier poste (3) étant approximativement égal au temps de meulage T₂ dans le deuxième poste (4).

13. Procédé selon la revendication 12, dans lequel les deux disques de meulage de paliers de levée (17, 18) se trouvent sur des broches de meulage de paliers de levée (14, 15) qui sont disposées sur un chariot à deux axes croisés (11) pour paliers de levée, la première broche de meulage de palier de levée (14) avec le premier disque de meulage de paliers de levée (17) étant disposée dans la direction d'avance (axe X) fixement sur le chariot à deux axes croisés (11) pour paliers de levée, et étant avancée par celui-ci, tandis que la deuxième broche de meulage de palier de levée (15) avec le deuxième disque de meulage de paliers de levée (18) peut être avancée vers le vilebrequin (22) au moyen d'un axe CN agissant dans des limites restreintes en vue de la correction de dimension et/ou de rotondité, indépendamment du déplacement du chariot à deux axes croisés (11) pour paliers de levée.

14. Procédé selon la revendication 12 ou 13, dans lequel les disques de meulage de paliers principaux (10) de la broche de meulage de paliers principaux (9) sont avancés radialement pour meuler les paliers principaux (23), et sont décalés axialement pour meuler les côtés plans (28) du vilebrequin (22).

15. Procédé selon la revendication 14, dans lequel les disques de meulage de paliers principaux (10) sont décalés axialement en décalant axialement le chariot à deux axes croisés (6) pour paliers principaux.

16. Procédé selon la revendication 14, dans lequel les disques de meulage de paliers principaux (10) sont décalés axialement en étant décalés axialement sur la broche de meulage de paliers principaux (9).

17. Procédé selon la revendication 12 ou 13, dans lequel les côtés plans (28) du vilebrequin (22) sont meulés au moyen des disques de meulage de paliers principaux (10), en décalant axialement dans ce cas le vilebrequin (22).
